# EUROPÄISCHE PATENTSCHRIFT

(11) **EP 3 759 274 B1**
(45) Veröffentlichungstag und Bekanntmachung des Hinweises auf die Patenterteilung: **12.04.2023**
(21) Anmeldenummer: 19706513.9
(22) Anmeldetag: 18.02.2019
(51) Int. Cl.: D06F 58/20

(54) **GERÄT ZUM TROCKNEN VON WÄSCHE**
APPLIANCE FOR DRYING LAUNDRY
APPAREIL POUR SÉCHER DU LINGE

(30) Priorität: 02.03.2018 DE 102018203158
(43) Veröffentlichungstag der Anmeldung: 06.01.2021
(73) Patentinhaber: BSH Hausgeräte GmbH, 81739 München (DE)
(72) Erfinder: HARBACH, Alvaro, 10555 Berlin (DE); HEYDER, Reinhard, 13403 Berlin (DE); STOLZE, Andreas, 14612 Falkensee (DE)
(86) Internationale Anmeldenummer: PCT/EP2019/053911
(87) Internationale Veröffentlichungsnummer: WO 2019/166250

(56) Entgegenhaltungen:
- DE-A1- 1 410 206
- JP-A- 2004 135 752
- US-A1- 2016 168 777
- US-B2- 8 826 559

## Beschreibung

Die Erfindung betrifft ein Gerät zum Trocknen von Wäsche, aufweisend wenigstens ein offenes Prozessluftsystem mit wenigstens einer zu trocknende Wäsche aufnehmenden Trockenkammer und wenigstens eine thermisch an das Prozessluftsystem gekoppelte Wärmepumpe, die wenigstens einen als Wärmesenke für aus der Trockenkammer abgeführte Prozessluft dienenden Verdampfer und wenigstens einen als Wärmequelle für der Trockenkammer zuzuführende Prozessluft dienenden Verflüssiger aufweist.

Geräte zum Trocknen von Wäsche sind in vielfältigen Ausgestaltungen bekannt. Insbesondere sind Geräte zum Trocknen von Wäsche bekannt, die ein offenes Prozessluftsystem mit einer zu trocknende Wäsche aufnehmenden Trockenkammer und eine Rückgewinnung von Wärme aus der in dem Prozessluftsystem strömenden Prozessluft ermöglichen. Ein solches Gerät kann beispielsweise als Ablufttrockner mit Wärmerückgewinnung ausgebildet sein. Entsprechende Geräte sind beispielsweise aus DE 197 37 075 A1, DE 197 31 826 A1 und DE 30 00 865 A1 bekannt. Dabei kann das Aggregat zur Wärmerückgewinnung ein einzelner thermisch an das Prozessluftsystem gekoppelter Wärmetauscher oder eine thermisch an das Prozessluftsystem gekoppelte Kompressor-Wärmepumpe sein. In letzterem Fall wird der aus der Trockenkammer austretenden Abluft mittels eines Verdampfers der Wärmepumpe Wärme entzogen, die in einem Kältemittelkreislauf der Wärmepumpe mittels eines Verflüssigers der Wärmepumpe der in das Prozessluftsystem eingetretenen Prozessluft wieder zugeführt wird. EP 2 037 034 B1 offenbart zudem einen Ablufttrockner mit einer Wärmepumpe und einer Reinigungseinrichtung zum Reinigen des Verdampfers der Wärmepumpe.

Da ein Ablufttrockner ein offenes Prozessluftsystem aufweist, wird mit dem Ablufttrockner im Gegensatz zu einem Kondensationstrockner mit einer geschlossenem Prozessluftführung und Wärmerückgewinnung neben der latenten auch sensible Wärme zurückgewonnen. Zusätzlich erhöht auch die über den Verflüssiger der Wärmepumpe in die Prozessluft eingebrachte Kompressorleistung die Trockengeschwindigkeit. Dadurch kann ein Ablufttrockner mit Wärmerückgewinnung trotz eines Kondensationswirkungsgrades kleiner 50% geringere Verbrauchswerte haben als ein Kondensationstrockner.

In einem geschlossenen Prozessluftsystem führt die kontinuierlich eingebrachte Kompressorleistung zu einer zunehmenden Erwärmung des Kondensationstrockners. Steht dieser Leistungseintrag nicht im Gleichgewicht mit den während eines Trocknungsvorgangs gegebenen Energieverlusten, wie beispielsweise einer Bauteilerwärmung, Verlusten durch Wärmestrahlung, Konvektion oder Leckage, können das Prozessluftsystem und die Wärmepumpe überhitzen, wodurch die Effizienz der Wärmepumpe sinkt. Als Gegenmaßnahme hierzu sind Anwendungen mit aktiv gekühlten Zusatzwärmetauschern im Kältemittelkreislauf der Wärmepumpe oder mit Luft-Luft-Wärmetauschern in der Prozessluft bekannt.

Da in einem offenen Prozessluftsystem eines Ablufttrockners die Temperatur der angesaugten Prozessluft nahezu konstant bleibt und nicht höher als die Umgebungstemperatur ist, kommt es zu keiner entsprechenden Überhitzung. Das konstant niedrige Temperaturniveau der angesaugten Umgebungsluft bedingt hohe Wirkungsgrade der Wärmepumpe. Demgegenüber kann der Nachteil einer Gesamtenergiebilanz des Aufstellortes stehen, da die in der Regel wärmere Raumluft mehrmals durch kältere Außenluft ausgetauscht wird. DE 103 49 712 A1 offenbart einen Ablufttrockner mit einem regelbaren Umluftanteil. Bekannt ist zudem, dass Ablufttrockner mit einer Wärmepumpe und einer Zusatzheizung sehr hohe Entfeuchtungsleistungen realisieren können.

Die DE 10 2010 028 741 A1 offenbart mögliche Anordnungen von Wärmetauschern einer Wärmepumpe in Zusammenhang mit einem Ablufttrockner mit offenem Prozessluftsystem. Insbesondere sind eine Anordnung der Wärmetauscher parallel übereinander und in eine Anordnung der Wärmetauscher parallel nebeneinander offenbart. Für die auf dem europäischen Markt genormten Abmessungen von Gehäusen von Wäschetrocknern ergeben sich hieraus gegenüber der üblichen Anordnung der Wärmetauscher, die in einem Wärmetauscher mit geschlossenem Prozessluftkreislauf bezüglich einer Prozessluftströmung hintereinanderliegen, deutlich reduzierte Anströmquerschnitte. Bedingt durch zusätzliche Trennwände oder Rohrbögen können die Anströmquerschnitte kleiner 50 % der Ausgangsgrößen sein. Diese starke Reduzierung der Anströmquerschnitte führt bei üblichen Volumenströmen von 200 m³/h bis 250 m³/h zu Druckverlusten an den Wärmetauschern, die mit über 300 Pa für die Gebläsecharakteristik nicht akzeptabel sind.

JP 2004 135 752 A offenbart ein Gerät zum Trocknen von Wäsche gemäß dem Oberbegriff von Anspruch 1.

Eine Aufgabe der Erfindung ist es, eine Wärmeübertragung zwischen einem Prozessluftsystem und einer Wärmepumpe eines Geräts zum Trocknen von Wäsche zu verbessern und Druckverluste innerhalb des Prozessluftsystems zu minimieren.

Diese Aufgabe wird durch den unabhängigen Patentanspruch gelöst. Vorteilhafte Ausgestaltungen sind in der nachfolgenden Beschreibung, den abhängigen Patentansprüchen und der Figur wiedergegeben, wobei diese Ausgestaltungen jeweils für sich genommen oder in verschiedener Kombination von wenigstens zwei dieser Ausgestaltungen miteinander einen weiterbildenden, insbesondere auch bevorzugten oder vorteilhaften, Aspekt der Erfindung darstellen können.

Ein erfindungsgemäßes Gerät zum Trocknen von Wäsche weist wenigstens ein offenes Prozessluftsystem mit wenigstens einer zu trocknende Wäsche aufnehmenden Trockenkammer und wenigstens eine thermisch an das Prozessluftsystem gekoppelte Wärmepumpe auf, die wenigstens einen als Wärmesenke für aus der Trockenkammer abgeführte Prozessluft dienenden Verdampfer und wenigstens einen als Wärmequelle für der Trockenkammer zuzuführende Prozessluft dienenden Verflüssiger aufweist. Der Verdampfer und der Verflüssiger sind in einer senkrecht zu einer Gerätehochachse gegebenen Richtung seitlich nebeneinander und in Richtung der Gerätehochachse höhenversetzt zueinander angeordnet, wobei entweder einerseits ein Abschnitt einer die Trockenkammer mit dem Verdampfer verbindenden ersten Prozessluftleitung oberhalb des Verflüssigers verläuft und ein Abschnitt einer den Verflüssiger mit der Trockenkammer verbindenden zweiten Prozessluftleitung unterhalb des Verdampfers verläuft oder andererseits ein Abschnitt einer die Trockenkammer mit dem Verdampfer verbindenden ersten Prozessluftleitung unterhalb des Verflüssigers verläuft und ein Abschnitt einer den Verflüssiger mit der Trockenkammer verbindenden zweiten Prozessluftleitung oberhalb des Verdampfers verläuft. Der Verdampfer und der Verflüssiger sind unter Belassung eines vorgegebenen Bauraums in der senkrecht zu der Gerätehochachse gegebenen Richtung seitlich beabstandet zueinander angeordnet, wobei der oberhalb bzw. unterhalb des Verflüssigers verlaufende Abschnitt der ersten Prozessluftleitung kommunizierend mit einem sich in Richtung des Verdampfers aufweitenden, mit dem Verdampfer verbundenen Einführabschnitt der ersten Prozessluftleitung verbunden ist, wobei der unterhalb bzw. oberhalb des Verdampfers verlaufende Abschnitt der zweiten Prozessluftleitung kommunizierend mit einem sich in Richtung des Verflüssigers aufweitenden, mit dem Verflüssiger verbundenen Abführabschnitt der zweiten Prozessluftleitung verbunden ist, und wobei der Einführabschnitt und der Abführabschnitt in Geräthöhenrichtung benachbart zueinander und zumindest größtenteils in dem Bauraum zwischen dem Verdampfer und dem Verflüssiger angeordnet sind und sich gegenläufig verjüngen.

Durch die erfindungsgemäße Anordnung des Verdampfers, des Verflüssigers und der Abschnitte der Prozessluftleitungen relativ zueinander können ein größerer Anströmquerschnitt für den Verdampfer anströmende Prozessluft und ein größerer Abströmquerschnitt für von dem Verflüssiger abströmende Prozessluft im Vergleich zu den in 201001572 beschriebenen Anordnungsmöglichkeiten von Wärmetauschern einer Wärmepumpe realisiert werden. Hierdurch kann eine maximale volumetrische Leistungsdichte bei gleichzeitiger Reduzierung von Druckverlusten sowohl kältemittelseitig als auch prozessluftseitig erreicht werden, ohne dass hierzu die Abmessungen des Geräts geändert werden müssen. Insbesondere sind keine oder lediglich geringe bauliche Veränderungen an einem Basisgerät erforderlich. Wesentlich ist, dass die Wärmeübertragung zwischen einem Prozessluftsystem und der Wärmepumpe verbessert werden kann und gleichzeitig Druckverluste innerhalb des Prozessluftsystems minimiert werden können.

Der Verdampfer und der Verflüssiger sind in einer senkrecht zur Gerätehochachse gegebenen Richtung seitlich nebeneinander und in Richtung der Gerätehochachse höhenversetzt zueinander angeordnet. Dies bedeutet, dass entweder der Verdampfer bezüglich der Gerätehochachse höher als der Verflüssiger angerordnet ist oder der Verflüssiger bezüglich der Gerätehochachse höher als der Verflüssiger angerordnet ist. Bei der ersten Alternative verläuft der Abschnitt der ersten Prozessluftleitung oberhalb des Verflüssigers und der Abschnitt der zweiten Prozessluftleitung unterhalb des Verdampfers. Bei der zweiten Alternative verläuft der Abschnitt der ersten Prozessluftleitung unterhalb des Verflüssigers und der Abschnitt der zweiten Prozessluftleitung oberhalb des Verdampfers. Dass die beiden Wärmetauscher, das heißt der Verdampfer und der Verflüssiger, seitlich nebeneinander angeordnet sind, bedeutet, dass eine Unterseite des jeweilig höher angeordneten Wärmetauschers tiefer als eine Oberseite des jeweilig tiefer angeordneten Wärmetauschers angeordnet ist. Vorzugsweise sind die beiden Wärmetauscher derart seitlich nebeneinander angeordnet, dass die beiden Wärmetauscher in einem vorgegebenen Abstand seitlich beabstandet voneinander angeordnet sind und sich somit seitlich nicht kontaktieren.

Das offene Prozessluftsystem ist teilweise durch die zu trocknende Wäsche aufnehmende Trockenkammer gebildet und weist wenigstens ein Prozessluftgebläse zum Bewegen von Prozessluft durch kommunizierend mit der Trockenkammer verbundene Prozessluftführungen des Prozessluftsystems auf. Das Prozessluftgebläse ist insbesondere an der zweiten Prozessluftleitung angeordnet. Das Prozessluftsystem kann zudem wenigstens einen Prozessluftfilter aufweisen, der beispielsweise an der ersten Prozessluftleitung angeordnet ist. Des Weiteren kann das Prozessluftsystem wenigstens eine elektrische Zusatzheizeinheit aufweisen, die an der zweiten Prozessluftleitung angeordnet sein kann.

Die Wärmepumpe ist vorzugsweise unmittelbar thermisch an das Prozessluftsystem gekoppelt. Insbesondere sind der Verdampfer und der Verflüssiger thermisch an das Prozessluftsystem gekoppelt. Die Wärmepumpe kann als Kompressor-Wärmepumpe ausgebildet sein und entsprechend wenigstens einen Kompressor zum Verdichten des Kältemittels der Wärmepumpe und wenigstens eine Expansionseinheit zu Expandieren des Kältemittels aufweisen. Der Verdampfer entzieht der aus der Trockenkammer abgeführten Prozessluft Wärme (Wärmesenke), während Kältemittel innerhalb des Verdampfers verdampft wird. Der Verflüssiger führt der der Trockenkammer zuzuführenden Prozessluft Wärme zu (Wärmequelle), während Kältemittel innerhalb des Verflüssigers verflüssigt wird.

Das Gerät zum Trocknen von Wäsche kann beispielsweise als Wäschetrockner (Ablufttrockner), als Waschtrockner mit einer Ablufttrockenfunktion oder als Trockenschrank mit einer Ablufttrockenfunktion ausgebildet sein.

Vorzugsweise ist der Einführabschnitt, über den die von der Trockenkammer kommende Prozessluft dem Verdampfer zugeführt wird, derart aufgeweitet, dass seine auf der Seite des Verdampfers angeordnete Auslassöffnung eine Querschnittsfläche aufweist, die hinsichtlich ihrer Größe und Formgebung annähernd oder exakt einer dem Einführabschnitt zugewandten Seitenfläche des Verdampfers entspricht. Vorzugsweise ist der Abführabschnitt, über den die von dem Verflüssiger kommende Prozessluft der Trockenkammer zugeführt wird, derart aufgeweitet, dass seine auf der Seite des Verflüssigers angeordnete Einlassöffnung eine Querschnittsfläche aufweist, die hinsichtlich ihrer Größe und Formgebung annähernd oder exakt einer dem Abführabschnitt zugewandten Seitenfläche des Verflüssigers entspricht. Da die teilweise größer ausgebildeten Endabschnitte (Einführabschnitt, Abführabschnitt) der Prozessluftleitungen größtenteils oder vollständig in dem Bauraum zwischen den seitlich beabstandet zueinander angeordneten Wärmetauschern (Verdampfer, Verflüssiger) angeordnet sind und lediglich der sich jeweilig an den jeweiligen Endabschnitt anschließende Abschnitt der jeweiligen Prozessluftleitung, der eine geringere Bauhöhe als der größere Teil des jeweiligen Endabschnitts aufweist, oberhalb bzw. unterhalb an dem jeweiligen Wärmetauscher vorbeigeführt ist, bilden die Wärmetauscher und die Abschnitte der Prozessluftleitungen ein Baugruppe, deren Bauhöhe etwa einer herkömmlich für eine Baugruppe mit entsprechenden Funktionsbauteilen üblichen Bauhöhe entspricht, so dass die Baugruppe in dem Gerät verbaut werden kann, ohne dass hierzu Abmessungen des Geräts geändert werden müssen. Insbesondere können die beiden Endabschnitte (Einführabschnitt, Abführabschnitt) der Prozessluftleitungen durch ihre gegenläufige bzw. komplementäre Verjüngung und ihre in Geräthöhenrichtung benachbarte Anordnung größtenteils oder vollständig in dem Bauraum zwischen dem Verdampfer und dem Verflüssiger, also bauraumsparend in dem Bauraum angeordnet werden. Durch die Aufweitung der Endabschnitte (Einführabschnitt, Abführabschnitt) werden Prozessluftleitungsabschnitte mit vergrößerter Strömungsquerschnittsfläche bereitgestellt und es geht kein für die Wärmeübertragungsleistung maßgebliches Volumen innerhalb des Prozessluftsystems verloren. Die größeren Strömungsquerschnittsflächen quer zu der jeweiligen Prozessluftströmung ermöglicht eine Erhöhung der Wärmeübertragungsleistung und niedrigere Druckverluste innerhalb des Prozessluftsystems.

Eine vorteilhafte Ausgestaltung sieht vor, dass eine Gesamthöhe einer aus dem Verdampfer und dem Abschnitt der zweiten Prozessluftleitung gebildeten ersten Baugruppe einer Gesamthöhe einer aus dem Verflüssiger und dem Abschnitt der ersten Prozessluftleitung gebildeten zweiten Baugruppe entspricht. Hierdurch ist die aus den Wärmetauschern (Verdampfer, Verflüssiger) und den Abschnitten der Prozessluftleitungen gebildete Baugruppe gleichmäßig hoch und somit in etwa wie eine herkömmliche Baugruppe ausgebildet, so dass die Baugruppe in einem herkömmlichen Gerät verbaut werden kann, ohne dass größere Änderungen an dem Gerät vorgenommen werden müssen.

Nach einer weiteren vorteilhaften Ausgestaltung entspricht eine Gesamthöhe einer aus dem Einführabschnitt und dem Abführabschnitt gebildeten dritten Baugruppe der Gesamthöhe der ersten Baugruppe. Auch hierdurch wird der aus den Wärmetauschern (Verdampfer, Verflüssiger) und den Abschnitten der Prozessluftleitungen gebildete Baugruppe eine gleichmäßig Bauhöhe verliehen, um die Baugruppe entsprechend einer herkömmlichen Baugruppe verbauen zu können.

Im Folgenden wird die Erfindung unter Bezugnahme auf die anliegende Figur anhand einer bevorzugten Ausführungsform exemplarisch erläutert. Es zeigt:

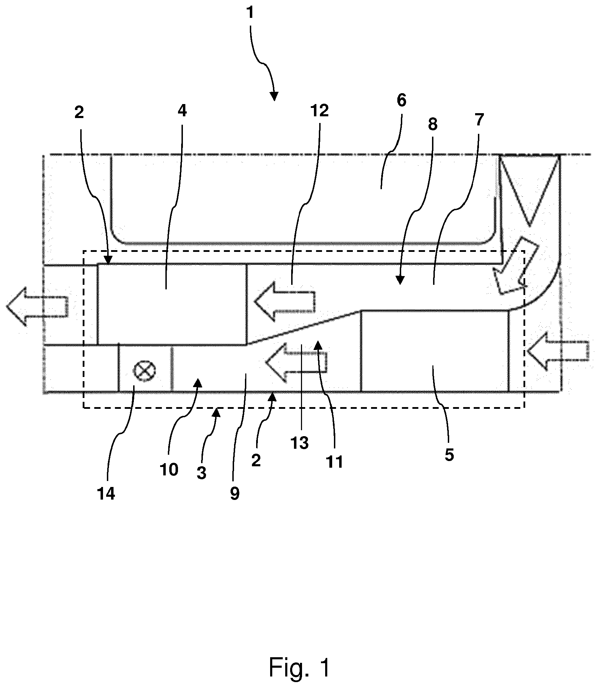

- Fig. 1: eine schematische Schnittdarstellung eines Ausführungsbeispiels für ein erfindungsgemäßes Gerät.

Fig. 1 zeigt eine schematische Schnittdarstellung eines Ausführungsbeispiels für ein erfindungsgemäßes Gerät 1 zum Trocknen von Wäsche.

Das Gerät 1 weist ein offenes Prozessluftsystem 2 mit einer zu trocknende Wäsche aufnehmenden Trockenkammer 6 und eine thermisch an das Prozessluftsystem 2 gekoppelte Wärmepumpe 3 auf. Die Wärmepumpe 3 weist einen als Wärmesenke für aus der Trockenkammer abgeführte Prozessluft dienenden Verdampfer 4, wenigstens einen als Wärmequelle für der Trockenkammer zuzuführende Prozessluft dienenden Verflüssiger 5, einen nicht gezeigten Kompressor, eine nicht gezeigte Expansionseinheit und diese Komponenten miteinander verbindende, nicht gezeigte Kältemittelleitungen auf.

Der Verdampfer 4 und der Verflüssiger 5 sind seitlich nebeneinander und höhenversetzt zueinander angeordnet. Insbesondere sind der Verdampfer 4 und der Verflüssiger 5 unter Belassung eines vorgegebenen Bauraums 11 seitlich beabstandet zueinander angeordnet. Ein Abschnitt 7 einer die Trockenkammer 6 mit dem Verdampfer 4 verbindenden ersten Prozessluftleitung 8 verläuft oberhalb des Verflüssigers 5 und ein Abschnitt 9 einer den Verflüssiger 5 mit der Trockenkammer 6 verbindenden zweiten Prozessluftleitung 10 verläuft unterhalb des Verdampfers 4.

Der oberhalb des Verflüssigers 5 verlaufende Abschnitt 7 der ersten Prozessluftleitung 8 ist kommunizierend mit einem sich in Richtung des Verdampfers 4 aufweitenden, mit dem Verdampfer 4 verbundenen Einführabschnitt 12 der ersten Prozessluftleitung 8 verbunden. Der unterhalb des Verdampfers 4 verlaufende Abschnitt 9 der zweiten Prozessluftleitung 10 ist kommunizierend mit einem sich in Richtung des Verflüssigers 5 aufweitenden, mit dem Verflüssiger 5 verbundenen Abführabschnitt 13 der zweiten Prozessluftleitung 10 verbunden. Der Einführabschnitt 12 und der Abführabschnitt 13 sind in Geräthöhenrichtung benachbart zueinander und vollständig in dem Bauraum 11 zwischen dem Verdampfer 4 und dem Verflüssiger 5 angeordnet. Zudem verjüngen sich der Einführabschnitt 12 und der Abführabschnitt 13 gegenläufig, indem die einander zugewandt angeordneten Wandabschnitte des Einführabschnitts 12 und des Abführabschnitts 13 relativ zu einer Strömungsrichtung der Prozessluft gegenläufig geneigt angeordnet sind.

Eine Gesamthöhe einer aus dem Verdampfer 4 und dem Abschnitt 9 der zweiten Prozessluftleitung 10 gebildeten ersten Baugruppe entspricht einer Gesamthöhe einer aus dem Verflüssiger 5 und dem Abschnitt 7 der ersten Prozessluftleitung 8 gebildeten zweiten Baugruppe. Eine Gesamthöhe einer aus dem Einführabschnitt 12 und dem Abführabschnitt 13 gebildeten dritten Baugruppe entspricht der Gesamthöhe der ersten Baugruppe.

In einem Trocknungsbetrieb des Geräts 1 wird Umgebungsluft mittels eines an der zweiten Prozessluftleitung 10 angeordneten Prozessluftgebläses 14 in die zweite Prozessluftleitung 10 eingesaugt, wobei die angesaugte Umgebungsluft an einer nicht gezeigten Lufteintrittsöffnung an einer nicht gezeigten Vorderwand des Geräts 1 in das Gerät 1 eintritt und anschließend den Verflüssiger 5 umströmt bzw. durchströmt. Hierdurch wird die angesaugte Umgebungsluft erwärmt, wodurch sie zur Prozessluft wird. Die aus dem Verflüssiger 5 austretende Prozessluft wird durch den Abschnitt 9 der zweiten Prozessluftleitung 10 gesaugt und anschließend in die Trockenkammer 6 eingeleitet, um dort befindliche feuchte Wäsche zu trocknen. Die mit Feuchtigkeit beladene, aus der Trockenkammer 6 austretende Prozessluft tritt in die erste Prozessluftleitung 8 ein und strömt durch den Abschnitt 7 der ersten Prozessluftleitung 8 zu dem Verdampfer 4. Die den Verdampfer 4 anschließend umströmende bzw. durchströmende Prozessluft wird mittels des Verdampfers 4 abgekühlt, wobei gleichzeitig in der Prozessluft enthaltene Feuchtigkeit an dem Verdampfer 4 kondensiert und aufgefangen und/oder zur Spülung der Verdampfers 4 und/oder des Verflüssigers 5 weiterverwendet wird. Die aus dem Verdampfer 4 austretende Prozessluft verlässt anschließend das Gerät 1.

Eine Öffnungsquerschnittsfläche des Einführabschnitts 12 an seinem dem Verdampfer 4 zugewandten Ende entspricht bezüglich ihrer Größe und Formgebung im Wesentlichen der dem Einführabschnitt 12 zugewandten Seitenfläche des Verdampfers 4. Eine Öffnungsquerschnittsfläche des Abführabschnitts 13 an seinem dem Verflüssiger 5 zugewandten Ende entspricht bezüglich ihrer Größe und Formgebung im Wesentlichen der dem Abführabschnitt 13 zugewandten Seitenfläche des Verflüssigers 5. Hierdurch werden maximale Strömungsquerschnitte bereitgestellt, um eine maximale Wärmeübertragungsleistung bereitstellen zu können und Druckverluste innerhalb des Prozessluftsystems 2 minimieren zu können.

### Bezugszeichenliste:

- 1: Gerät
- 2: Prozessluftsystem
- 3: Wärmepumpe
- 4: Verdampfer
- 5: Verflüssiger
- 6: Trockenkammer
- 7: Abschnitt von 8
- 8: erste Prozessluftleitung
- 9: Abschnitt von 10
- 10: zweite Prozessluftleitung
- 11: Bauraum zwischen 4 und 5
- 12: Einführabschnitt von 8
- 13: Abführabschnitt von 10
- 14: Prozessluftgebläse

## Patentansprüche

1. Gerät (1) zum Trocknen von Wäsche, aufweisend wenigstens ein offenes Prozessluftsystem (2) mit wenigstens einer zu trocknende Wäsche aufnehmenden Trockenkammer (6) und wenigstens eine thermisch an das Prozessluftsystem (2) gekoppelte Wärmepumpe (3), die wenigstens einen als Wärmesenke für aus der Trockenkammer (6) abgeführte Prozessluft dienenden Verdampfer (4) und wenigstens einen als Wärmequelle für der Trockenkammer (6) zuzuführende Prozessluft dienenden Verflüssiger (5) aufweist, **dadurch gekennzeichnet, dass** der Verdampfer (4) und der Verflüssiger (5) in einer senkrecht zu einer Gerätehochachse gegebenen Richtung seitlich nebeneinander und in Richtung der Gerätehochachse höhenversetzt zueinander angeordnet sind, wobei entweder einerseits ein Abschnitt (7) einer die Trockenkammer (6) mit dem Verdampfer (4) verbindenden ersten Prozessluftleitung (8) oberhalb des Verflüssigers (5) verläuft und ein Abschnitt (9) einer den Verflüssiger (5) mit der Trockenkammer (6) verbindenden zweiten Prozessluftleitung (10) unterhalb des Verdampfers (4) verläuft oder andererseits ein Abschnitt einer die Trockenkammer (6) mit dem Verdampfer (4) verbindenden ersten Prozessluftleitung (8) unterhalb des Verflüssigers (5) verläuft und ein Abschnitt einer den Verflüssiger (5) mit der Trockenkammer (6) verbindenden zweiten Prozessluftleitung (10) oberhalb des Verdampfers (4) verläuft, wobei der Verdampfer (4) und der Verflüssiger (5) unter Belassung eines vorgegebenen Bauraums (11) in der senkrecht zu der Gerätehochachse gegebenen Richtung seitlich beabstandet zueinander angeordnet sind, wobei der oberhalb bzw. unterhalb des Verflüssigers (5) verlaufende Abschnitt (7) der ersten Prozessluftleitung (8) kommunizierend mit einem sich in Richtung des Verdampfers (4) aufweitenden, mit dem Verdampfer (4) verbundenen Einführabschnitt (12) der ersten Prozessluftleitung (8) verbunden ist, wobei der unterhalb bzw. oberhalb des Verdampfers (4) verlaufende Abschnitt (9) der zweiten Prozessluftleitung (10) kommunizierend mit einem sich in Richtung des Verflüssigers (5) aufweitenden, mit dem Verflüssiger (5) verbundenen Abführabschnitt (13) der zweiten Prozessluftleitung (10) verbunden ist, und wobei der Einführabschnitt (12) und der Abführabschnitt (13) in Geräthöhenrichtung benachbart zueinander und zumindest größtenteils in dem Bauraum (11) zwischen dem Verdampfer (4) und dem Verflüssiger (5) angeordnet sind und sich gegenläufig verjüngen.

2. Gerät (1) zum Trocknen von Wäsche nach Anspruch 1, **dadurch gekennzeichnet, dass** eine Gesamthöhe einer aus dem Verdampfer (4) und dem Abschnitt (9) der zweiten Prozessluftleitung (10) gebildeten ersten Baugruppe einer Gesamthöhe einer aus dem Verflüssiger (5) und dem Abschnitt (7) der ersten Prozessluftleitung (8) gebildeten zweiten Baugruppe entspricht.

3. Gerät (1) zum Trocknen von Wäsche nach Anspruch 2, **dadurch gekennzeichnet, dass** eine Gesamthöhe einer aus dem Einführabschnitt (12) und dem Abführabschnitt (13) gebildeten dritten Baugruppe der Gesamthöhe der ersten Baugruppe entspricht.

## Claims

1. Appliance (1) for drying laundry, comprising at least one open process air system (2) having at least one drying chamber (6) for receiving laundry to be dried and at least one heat pump (3) that is thermally coupled to the process air system (2), which heat pump has at least one evaporator (4) serving as a heat sink for process air discharged from the drying chamber (6) and at least one condenser (5) serving as a heat source for the process air to be supplied to the drying chamber (6), **characterised in that** the evaporator (4) and the condenser (5) are arranged laterally side-by-side to one another in a direction perpendicular to a vertical axis of the appliance and offset in height in respect to each other in the direction of the vertical axis of the appliance, wherein either on the one hand one portion (7) of a first process air duct (8) connecting the drying chamber (6) to the evaporator (4) extends above the condenser (5) and one portion (9) of a second process air duct (10) connecting the condenser (5) to the drying chamber (6) extends below the evaporator (4) or on the other hand one portion of a first process air duct (8) connecting the drying chamber (6) to the evaporator (4) extends below the condenser (5) and one portion of a second process air duct (10) connecting the condenser (5) to the drying chamber (6) extends above the evaporator (4), wherein the evaporator (4) and the condenser (5) are arranged laterally at a distance from one another leaving a defined installation space (11) in the direction perpendicular to the vertical axis of the appliance, wherein the portion (7) of the first process air duct (8) extending above or below the condenser (5) is connected communicatively to a supply portion (12) of the first process air duct (8) widening in the direction of the evaporator (4) and connected to the evaporator (4), wherein the portion (9) of the second process air duct (10) extending below or above the evaporator (4) is connected communicatively to a discharge portion (13) of the second process air duct (10) widening in the direction of the condenser (5) and connected to the condenser (5), and wherein the supply portion (12) and the discharge portion (13) are arranged adjacent to one another in the direction of the appliance height and are at least largely arranged in the installation space (11) between the evaporator (4) and the condenser (5), and taper in opposite directions.

2. Appliance (1) for drying laundry according to claim 1, **characterised in that** an overall height of a first module formed from the evaporator (4) and the portion (9) of the second process air duct (10) corresponds to an overall height of a second module formed from the condenser (5) and the portion (7) of the first process air duct (8).

3. Appliance (1) for drying laundry according to claim 2, **characterised in that** an overall height of a third module formed from the supply portion (12) and the discharge portion (13) corresponds to the overall height of the first module.

## Revendications

1. Appareil (1) pour sécher du linge, comprenant au moins un système d'air de traitement ouvert (2) comprenant au moins un compartiment de séchage (6) recevant du linge à sécher et au moins une pompe à chaleur (3) couplée thermiquement au système d'air de traitement (2), qui comprend au moins un évaporateur (4) servant de puits thermique pour l'air de traitement extrait du compartiment de séchage (6) et au moins un condenseur (5) servant de source de chaleur pour l'air de traitement amené au compartiment de séchage (6),
**caractérisé en ce que** l'évaporateur (4) et le condenseur (5) sont disposés l'un à côté de l'autre latéralement dans une direction donnée perpendiculaire à un axe vertical d'appareil et de façon décalée en hauteur l'un par rapport à l'autre dans la direction de l'axe vertical d'appareil,
dans lequel
ou bien d'une part, une section (7) d'un premier conduit d'air de traitement (8) reliant le compartiment de séchage (6) à l'évaporateur (4) s'étend au-dessus du condenseur (5) et une section (9) d'un deuxième conduit d'air de traitement (10) reliant le condenseur (5) au compartiment de séchage (6) s'étend en dessous de l'évaporateur (4),
ou bien d'autre part
une section d'un premier conduit d'air de traitement (8) reliant le compartiment de séchage (6) à l'évaporateur (4) s'étend en dessous du condenseur (5) et une section d'un deuxième conduit d'air de traitement (10) reliant le condenseur (5) au compartiment de séchage (6) s'étend au-dessus de l'évaporateur (4),
dans lequel l'évaporateur (4) et le condenseur (5) sont disposés à distance l'un de l'autre latéralement dans la direction donnée perpendiculaire à l'axe vertical d'appareil, en laissant un espace de construction prédéterminé (11),
la section (7) du premier conduit d'air de traitement (8) s'étendant au-dessus ou en dessous du condenseur (5) est reliée de façon communicante à une section d'introduction (12) du premier conduit d'air de traitement (8) reliée à l'évaporateur (4), s'élargissant en direction de l'évaporateur (4),
la section (9) du deuxième conduit d'air de traitement (10) s'étendant en dessous ou au-dessus de l'évaporateur (4) est reliée de façon communicante à une section de sortie (13) du deuxième conduit d'air de traitement (10) reliée au condenseur (5), s'élargissant en direction du condenseur (5), et
dans lequel la section d'introduction (12) et la section de sortie (13) sont disposées au voisinage l'une de l'autre dans la direction verticale de l'appareil et au moins en grande partie dans l'espace de construction (11) entre l'évaporateur (4) et le condenseur (5) et s'amincissent dans un sens opposé.

2. Appareil (1) pour sécher du linge selon la revendication 1, **caractérisé en ce qu'**une hauteur totale d'un premier bloc formé par l'évaporateur (4) et la section (9) du deuxième conduit d'air de traitement (10) correspond à une hauteur totale d'un deuxième bloc formé par le condenseur (5) et la section (7) du premier conduit d'air de traitement (8).

3. Appareil (1) pour sécher du linge selon la revendication 2, **caractérisé en ce qu'**une hauteur totale d'un troisième bloc formé par la section d'introduction (12) et la section de sortie (13) correspond à la hauteur totale du premier bloc.
